Europäisches Patentamt

European Patent Office

Office européen des brevets

(19)

(11) Veröffentlichungsnummer: **0 130 367**
**B1**

(12) **EUROPÄISCHE PATENTSCHRIFT**

(45) Veröffentlichungstag der Patentschrift:
**06.08.86**

(21) Anmeldenummer: **84106115.3**

(22) Anmeldetag: **29.05.84**

(51) Int. Cl.⁴: **C 08 L 95/00, C 08 L 23/08**

(54) **Thermoplastische Formmassen auf Basis von Bitumen-Ethylenpolymerisat-Mischungen und deren Verwendung zur Herstellung von Formkörpern, insbesondere von Abdichtungsbahnen für den Hoch- und Tiefbau.**

(30) Priorität: **01.06.83 DE 3319844**

(43) Veröffentlichungstag der Anmeldung:
**09.01.85 Patentblatt 85/2**

(45) Bekanntmachung des Hinweises auf die Patenterteilung:
**06.08.86 Patentblatt 86/32**

(84) Benannte Vertragsstaaten:
**AT BE CH DE FR IT LI NL**

(56) Entgegenhaltungen:
**EP - A - 0 064 630**
**DE - B - 1 298 282**
**FR - A - 1 512 974**

(73) Patentinhaber: **BASF Aktiengesellschaft,**
**Carl-Bosch-Strasse 38, D-6700 Ludwigshafen (DE)**

(72) Erfinder: **Koehnlein, Ernst, Dr., Ungsteiner Strasse 4,**
**D-6700 Ludwigshafen (DE)**
Erfinder: **Bauer, Peter, Erich-Kaestner-Strasse 13,**
**D-6700 Ludwigshafen (DE)**
Erfinder: **Mueller-Tamm, Heinz, Dr., Ottweilerstrasse 9,**
**D-6700 Ludwigshafen (DE)**
Erfinder: **Hensel, Walter, Dr., Mundenheimer**
**Strasse 172, D-6700 Ludwigshafen (DE)**

## Beschreibung

Die Erfindung betrifft thermoplastische Formmassen auf der Basis von Mischungen aus (A) 20 bis 50 Gewichtsteilen eines Ethylencopolymerisats, das 7 bis 25 Gew.-% eines Vinylesters einer $C_2$- bis $C_3$-Alkancarbonsäure und/oder eines $C_1$- bis $C_4$-Alkylesters einer $C_3$- bis $C_4$-Alkencarbonsäure einpolymerisiert enthält, einen Schmelzindex von 0,2 bis 25 g/10 min und eine Dichte zwischen 0,918 und 0,965 g/cm³ aufweist, (B) 20 bis 50 Gewichtsteilen Bitumen, das entsprechend DIN 1995 eine Penetration bei 25° C von 3 bis 100 aufweist, (C) 20 bis 50 Gewichtsteilen eines Ethylenpolymerisats, (D) 0 bis 5 Gewichtsteilen Russ, (E) 0 bis 5 Gewichtsteilen Glycerinmonostearat und (F) 0 bis 30 Gewichtsteilen üblicher Füllstoffe.

Derartige Formmassen sind zur Herstellung von Formkörpern, insbesondere von Abdichtungsbahnen für den Hoch- und Tiefbau geeignet.

Stoffmischungen auf Basis von Ethylencopolymerisaten, die Vinylester einer $C_2$- bis $C_3$-Alkancarbonsäure und/oder $C_1$- bis $C_4$-Alkylester einer $C_3$- bis $C_4$-Alkencarbonsäure einpolymerisiert enthalten, und Bitumen sind aus der Literatur wohl bekannt (vgl. DE-PS 1 298 282 oder DE-PS 1 807 071).

Es ist weiterhin bekannt, obige Formmassen mit Russ, üblichen mineralischen Füllstoffen und/oder Glycerinmonostearat auszurüsten (vgl. DE-PS 1 807 071, DE-OS 1 910 178, DE-OS 1 962 640, DE-OS 2 353 439 oder DE-OS 31 17 672). Bekannt ist weiterhin, die mechanische Festigkeit der Bitumenmischung durch Zusätze von Polyethylen der Dichte 0,918 bis 0,935 g/cm³ in einem gewissen Ausmass zu erhöhen (vgl. DE-OS 19 48 526, DE-OS 31 17 672, DE-OS 23 04 004 oder DE-OS 21 12 355). Durch Zusätze von Polyethylen der Dichte 0,935 bis 0,960 g/cm³ kann die Festigkeit und Wärmeformbeständigkeit erhöht werden, gleichzeitig werden die Formkörper aber im unerwünschten Ausmass steifer. Insbesondere bei Abdichtungsbahnen ist eine hohe Steifigkeit aber unerwünscht, da die Handhabung steifer Bahnen bei der Verlegung erschwert ist.

Der Erfindung lag die Aufgabe zugrunde, eine thermoplastische Formmasse auf Basis von Bitumen und Ethylenpolymerisaten zu entwickeln, die eine hohe Festigkeit bei Raumtemperatur und eine hohe Wärmeformbeständigkeit aufweist. Die Steifigkeit des Materials soll bei Raumtemperatur niedrig gehalten werden und ihr Temperaturverlauf sollte möglichst flach sein, d.h. im Bereich hoher Temperaturen sollte noch ein möglichst hoher Torsionsmodul vorhanden sein bzw. die Temperatur, bei welcher der Torsionsmodul auf den Wert $G = 1 \text{ N/mm}^2$ abgesunken ist, sollte möglichst hoch liegen.

Diese Aufgabe wird erfindungsgemäss dadurch gelöst, dass man in den eingangs beschriebenen Mischungen als Ethylenpolymerisat (C) ein Copolymerisat aus 97 bis 85 Gew.-% Ethylen und 3 bis 15 Gew.-% eines $C_4$- bis $C_{10}$-$\alpha$-Olefins verwendet, das einen Schmelzindex von 0,1 bis 10 g/10 min und eine Dichte zwischen 0,918 und 0,935 g/cm³ aufweist.

Unter thermoplastischer Formmasse werden ungeformte oder vorgeformte Stoffe verstanden, die durch spanloses Formen innerhalb bestimmter Temperaturbereiche zu Formkörpern oder Halbzeug verarbeitet werden können. Ihr typisches Kennzeichen besteht darin, dass sie bei Erhöhung der Temperatur nach Überschreitung ihres Erweichungspunktes weich werden und bei Abkühlung wieder erhärten.

Die als Mischungskomponente (A) verwendeten Ethylencopolymerisate, die 7 bis 25 Gew.-% eines Vinylesters einer $C_2$- bis $C_3$-Alkancarbonsäure und/oder eines $C_1$- bis $C_4$-Alkylesters einer $C_3$- bis $C_4$-Alkencarbonsäure und 93 bis 75 Gew.-% Ethylen einpolymerisiert enthalten, wobei die Summe der Prozentzahlen 100 beträgt, sind an sich wohl bekannt. Bevorzugt enthalten diese Ethylencopolymerisate 10 bis 20 Gew.-%, bezogen auf das Copolymerisat, an Comonomeren, wobei Vinylacetat, n-, iso- oder tert.-Acrylsäurebutylester besonders geeignete Comonomere sind. Die Copolymerisate (A) weisen einen Schmelzindex zwischen 0,2 und 25, bevorzugt 1,0 bis 10 g/10 min auf, gemessen nach ASTM D 138-65 T bei einer Temperatur von 190° C und einem Auflagegewicht von 2,16 kg. Die Dichte der Ethylencopolymerisate (A) liegt zwischen 0,918 und 0,965 g/cm³, gemessen nach DIN 53 479.

Bitumen sind die in der DIN 55 946 definierten, bei schonender Aufarbeitung von Erdölen gewonnenen dunkelfarbigen, halbfesten bis springharten, schmelzbaren hochmolekularen Kohlenwasserstoffgemische. Die in der Mischung als Komponente (B) verwendeten Bitumen haben nach DIN 1995 eine Penetration bei 25° C von 3 bis 100 und einen Erweichungspunkt (Ring und Kugel) von 40 bis 140° C. Es können alle handelsüblichen natürlichen und synthetischen Bitumensorten verwendet werden. Besonders geeignet ist als Bitumenkomponente (B) ein Extraktions- und/oder Fällungsbitumen, das entsprechend DIN 1955 eine Penetration bei 25° C von 3 bis 10 und einen Erweichungspunkt nach DIN 1995 (Ring und Kugel) zwischen 40 und 110° C aufweist. Unter Extraktions- und/oder Fällungsbitumen werden ölarme Bitumensorten verstanden, die entsprechend stark spröde und hart sind und nur eine geringe Penetration aufweisen. Eine genauere Definition obiger Bitumensorten ist in der DE-PS 2 441 203 oder der US-PS 3 980 598 enthalten. Besonders geeignet ist ein Fällungsbitumen mit einer Penetration von 8 bei 25° C und einem Erweichungspunkt von 64° C.

Die Mischungen enthalten gegebenenfalls noch die Mischungskomponenten Russ, Glycerinmonostearat und/oder übliche Füllstoffe. Diese Komponenten sind so bekannt, dass sich nähere Erläuterungen erübrigen. Das Glycerinmonostearat dient zur Verbesserung der Verarbeitungseigenschaften, als Füllstoffe sind insbesondere Aluminiumoxidhydrat, Schiefermehl, Kreide, Glasfasern, Kieselgur etc. geeignet.

Die Herstellung der Formmassen kann auf übliche Weise erfolgen, z.B. durch Homogenisierung der Bestandteile mittels Kneter, Rührwerken, Walzwerken oder Extrudern bei Arbeitstemperaturen von 140 bis 250° C. Es spielt keine Rolle, an welcher Stelle des Mischungsvorgangs die Zugabe des Ethylencopolymerisats (A) oder der anderen Komponenten erfolgt.

Erfindungsgemäss wird der oben beschriebenen Mischung ein zweites Ethylencopolymerisat (C) zugesetzt, das aus 97 bis 85 Gew.-% Ethylen und 3 bis 15 Gew.-% eines $C_4$- bis $C_{10}$-$\alpha$-Olefins besteht, wobei die Summe der Prozentzahlen stets 100 ist. Die Ethylencopolymerisate (C) sind wohlbekannt und unter der Bezeichnung LLD-PE (= linear low density polyethylene) im Handel erhältlich (vgl. „Plastics Technology" *24*, (1978), Seiten 25, 27, 34, 36 und 43). Die erfindungsgemäss zu verwendenden Ethylencopolymerisate (C) enthalten als Comonomer bevorzugt Buten-1, Hexen-1 oder Octen-1, sie weisen einen Schmelzindex von 0,1 bis 10 g/10 min, gemessen nach ASTM D 138-65 T bei 190° C und 2,16 kg Auflagegewicht und eine Dichte nach DIN 53 479 von 0,918 bis 0,935 g/cm³ auf. Die Copolymerisate (C) werden durch Niederdruckcopolymerisation in Gegenwart eines Ziegler-Natta-Katalysators erhalten.

Die mit der Erfindung erzielten Vorteile sind insbesondere darin zu sehen, dass durch die Kombination zweier Ethylencopolymerisate als Mischungskomponenten mit Bitumen eine bituminöse Formmasse erhalten wird, die zu Formkörpern mit verbesserten mechanischen Eigenschaften in bezug auf Festigkeit bei Raumtemperatur, Wärmeformbeständigkeit und Steifigkeit verarbeitbar ist.

Die erhaltenen Formassen dienen insbesondere zur Herstellung von Abdichtungsbahnen für den Hoch- und Tiefbau. Die Bahnen können in einem weiteren Temperaturbereich hohe Schub- und Zugkräfte sowie starke Deformationen aufnehmen.

In den Beispielen wird die Festigkeit bei Raumtemperatur im Zugversuch nach DIN 53 455 geprüft. Als Mass für die Steifigkeit dient der Torsionsmodul (G), der im Torsionsschwingungsversuch nach DIN 53 445 gemessen wird. Die Wärmeformbeständigkeit wird a) als Zugversuch nach DIN 53 455 und b) als Schubmodul nach DIN 53 445 bei hohen Temperaturen geprüft, wobei unter hohen Temperaturen der Bereich oberhalb 70° C verstanden wird. Der Schmelzindex der verwendeten Polymerisate wurde nach ASTM D 138-65 T bei einer Temperatur von 190° C und einem Auflagegewicht von 2,16 kg, die Dichte nach DIN 53 479 gemessen.

*Beispiele*

1. Ethylen-n-Butylacrylat-Copolymerisat mit 18 Gew.-% n-Butylacrylat und einem Schmelzindex von 1,5 g/10 min wird mit Fällungsbitumen, das einen Erweichungspunkt (Ring und Kugel) von 64° C und eine Penetration nach DIN 1995 von 8 hat, in gleichen Teilen im Kneter gemischt. Aus der Mischung werden 2 mm dicke Platten gepresst, daraus werden Probestreifen ausgestanzt und im Zugversuch gemessen. Ausserdem wird der Torsionsmodul in Abhängigkeit von der Temperatur gemessen (vgl. Tab.).

2. Zu gleichen Teilen wurden gemischt
a) Ethylen-n-Butylacrylat-Copolymerisat wie Beispiel 1.
b) Polyethylen der Dichte 0,918 g/cm³ und des Schmelzindex von 1,5 g/10 min, hergestellt im Hochdruckpolymerisationsverfahren.
c) Fällungsbitumen wie in Beispiel 1.
   Die Mischung wird wie in Beispiel 1 geprüft.

3. Es wird verfahren wie in Beispiel 2, aber anstelle der Komponente (b) wird ein Polyethylen der Dichte 0,926 g/cm³ und des Schmelzindex 0,2 g/10 min, hergestellt im Hockdruckverfahren, eingesetzt.

4. Es wird verfahren wie in Beispiel 2, aber anstelle der Komponente (b) wird ein Ethylen-Buten-1-Copolymerisat mit 10 Gew.-% Buten-1, einer Dichte von 0,920 g/cm³ und einem Schmelzindex von 1 g/10 min, hergestellt im Niederdruckverfahren mit einem Ziegler-Natta-Katalysator, eingesetzt. Es zeigt sich (vgl. Tab.), dass nach Versuch 4 eine Folie mit der höchsten Festigkeit und grösster Dehnung bei Raumtemperatur (23° C) und bei 80° C und geringster Steifigkeit bei Raumtemperatur und eine hohe Temperatur, bei der die Torsionsnadel auf den Wert G = 1 N/mm² abgesunken ist, erhalten wird.

*Tabelle*

| Beispiel | Reissfestigkeit N/mm² | | Reissdehnung % | | Torsionsmodul N/mm² | | | Temperatur [°C] bei G = 1 N/mm² |
|---|---|---|---|---|---|---|---|---|
| | 23° C | 80° C | 23° C | 80° C | 23° C | 70° C | 80° C | |
| 1 | 5 | 0,5 | 700 | 150 | 13 | 0,8 | — | 66 |
| 2 | 8 | 0,9 | 700 | 110 | 60 | 9 | 3 | 100 |
| 3 | 10 | 1,2 | 700 | 120 | 80 | 9 | 5 | 110 |
| 4 | 13 | 1,5 | 800 | 200 | 50 | 6 | 5 | 110 |

## Patentansprüche

1. Thermoplastische Formmassen auf der Basis von Mischungen aus (A) 20 bis 50 Gewichtsteilen eines Ethylencopolymerisats, das 7 bis 25 Gew.-% eines Vinylesters einer $C_2$- bis $C_3$-Alkancarbonsäure und/oder eines $C_1$- bis $C_4$-Alkylesters einer $C_3$- bis $C_4$-Alkencarbonsäure einpolymerisiert

enthält, einen Schmelzindex von 0,2 bis 25 g/ 10 min und eine Dichte zwischen 0,918 und 0,965 g/cm³ aufweist, (B) 20 bis 50 Gewichtsteilen Bitumen, das entsprechend DIN 1995 eine Penetration bei 25° C von 3 bis 100 aufweist, (C) 20 bis 50 Gewichtsteilen eines Ethylenpolymerisats, (D) 0 bis 5 Gewichtsteilen Russ, (E) 0 bis 5 Gewichtsteilen Glycerinmonostearat und (F) 0 bis 30 Gewichtsteilen üblicher Füllstoffe, dadurch gekennzeichnet, dass das Ethylenpolymerisat (C) ein Copolymerisat aus 97 bis 85 Gew.-% Ethylen und 3 bis 15 Gew.-% eines $C_4$- bis $C_{10}$-$\alpha$-Olefins ist, einen Schmelzindex von 0,1 bis 10 g/10 min und eine Dichte zwischen 0,918 und 0,935 aufweist.

2. Verwendung der Formmassen nach Anspruch 1 zur Herstellung von Formkörpern.

3. Verwendung der Formmassen nach Anspruch 1 zur Herstellung von Abdichtungsbahnen für den Hoch- und Tiefbau.

## Claims

1. A thermoplastic moulding composition based on a mixture of (A) 20 to 50 parts by weight of an ethylene copolymer which contains 7 to 25% by weight of units of a vinyl ester of an alkanecarboxylic acid of 2 or 3 carbon atoms and/or of a $C_1$-$C_4$-alkyl ester of an alkenecarboxylic acid of 3 or 4 carbon atoms, and has a melt index of from 0.2 to 25 g/10 min and a density of from 0.918 to 0.965 g/cm³, (B) 20 to 50 parts by weight of bitumen which according to DIN 1995 has a penetration at 25° C of from 3 to 100, (C) 20 to 50 parts by weight of an ethylene polymer, (D) 0 to 5 parts by weight of carbon black, (E) 0 to 5 parts by weight of glycerol monostearate, and (F) 0 to 30 parts by weight of conventional fillers, wherein the ethylene polymer (C) is a copolymer of 97 to 85% by weight of ethylene and 3 to 15% by weight of an $\alpha$-olefin of 4 to 10 carbon atoms, and has a melt index of from 0.1 to 10 g/10 min and a density of from 0.918 to 0.935.

2. The use of a moulding composition as claimed in claim 1 for the production of moulded articles.

3. The use of a moulding composition as claimed in claim 1 for the production of webs of sealing material for building construction and civil engineering.

## Revendications

1. Matières à mouler thermoplastiques à base de mélanges de
(A) 20 à 50 parties en poids d'un copolymère d'éthylène, dans lequel sont copolymérisés 7 à 25% en poids d'un ester vinylique d'un acide alcane(en $C_2$ ou $C_3$)-carboxylique et(ou) d'un ester d'alkyle en $C_1$ à $C_4$ d'un acide alcène(en $C_3$ ou $C_4$)-carboxylique et qui possède une masse volumique comprise entre 0,918 et 0,965 g/ cm³ et un indice de fusion compris entre 0,2 et 25 g/10 min;
(B) 20 à 50 parties en poids d'un bitume avec une pénétration à 25° C selon la norme DIN 1995 comprise entre 3 et 100;
(C) 20 à 50 parties en poids d'un polymère éthylénique;
(D) 0 à 5 parties en poids de suie;
(E) 0 à 5 parties en poids de mono-stéarate de glycérine, et
(F) 0 à 30 parties en poids de matières de charge usuelles,
caractérisées en ce que le polymère éthylénique (C) est un copolymère de 97 à 85% en poids d'éthylène et de 3 à 15% en poids d'une $\alpha$-oléfine en $C_4$ à $C_{10}$, qui possède une masse volumique comprise entre 0,918 et 0,935 et un indice de fusion compris entre 0,1 et 10 g/10 min.

2. Utilisation des matières à mouler suivant la revendication 1 pour la production d'articles façonnés.

3. Utilisation des matières à mouler suivant la revendication 1 pour la production de bandes de calfeutrage pour la construction en surface ou souterraine.